# EUROPÄISCHE PATENTSCHRIFT

(11) **EP 3 676 159 B1**
(45) Veröffentlichungstag und Bekanntmachung des Hinweises auf die Patenterteilung: **06.04.2022**
(21) Anmeldenummer: 18740783.8
(22) Anmeldetag: 10.07.2018
(51) Int. Cl.: B62D 5/04, B62D 6/00, B62D 15/02

(54) **LENKUNGSSTEUERGERÄT UND VERFAHREN ZUR ERMITTLUNG EINES STELLSIGNALS FÜR EINE LEISTUNGSELEKTRONIK EINER LENKEINRICHTUNG EINES KRAFTFAHRZEUGS**
STEERING CONTROLLER AND METHOD FOR DETERMINING AN ACTUATING SIGNAL FOR A POWER ELECTRONICS UNIT OF A STEERING DEVICE OF A MOTOR VEHICLE
DISPOSITIF DE COMMANDE DE DIRECTION ET PROCÉDÉ DE DÉTERMINATION D'UN SIGNAL DE COMMANDE POUR L'ÉLECTRONIQUE DE PUISSANCE D'UN DISPOSITIF DE DIRECTION D'UN VÉHICULE AUTOMOBILE

(30) Priorität: 28.08.2017 DE 102017215013
(43) Veröffentlichungstag der Anmeldung: 08.07.2020
(73) Patentinhaber: Volkswagen Aktiengesellschaft, 38440 Wolfsburg (DE)
(72) Erfinder: SCHÄFER, Johannes Maria, 39615 Werben OT Berge (DE)
(86) Internationale Anmeldenummer: PCT/EP2018/068662
(87) Internationale Veröffentlichungsnummer: WO 2019/042640

(56) Entgegenhaltungen:
- EP-A1- 3 095 675
- EP-A2- 2 842 833
- US-A- 6 148 951

## Beschreibung

Die Erfindung betrifft ein Lenkungssteuergerät und ein Verfahren zur Ermittlung eines Stellsignals für eine Leistungselektronik einer Lenkeinrichtung eines Kraftfahrzeugs.

Moderne Kraftfahrzeuge verfügen über einen elektrischen Servomotor, der eine zusätzliche oder ausschließliche Lenkkraft (steer-by-wire) zum Auslenken der Fahrzeugräder erzeugt. Dabei wird ein Fahrerwunsch für den Lenkwinkel beispielsweise mittels eines Drehmoment- oder Drehwinkelsensors an einer Lenksäule erfasst und an ein Lenkungssteuergerät übermittelt. Das Lenkungssteuergerät generiert dann ein Stellsignal für eine Leistungselektronik, die dann entsprechende Steuerströme für den Elektromotor erzeugt. Zusätzlich sind Fahrerassistenzsysteme bekannt, wie beispielsweise Lane Keeping-Systeme, die ein versehentliches Verlassen der Fahrspur verhindern sollen. Diese liefern dann Signale an das Lenkungssteuergerät, um zusätzliche Lenkmomente zu generieren. Dabei wird ein Teil des angeforderten Lenkmoments auf das Eingangssignal des Sensors aufaddiert und zusätzlich ein direkter Anteil für das Stellsignal generiert. Diese Aufteilung bewirkt ein haptisches Feedback des Fahrerassistenzsystems für den Kraftfahrzeugführer.

Aus der DE 10 2014 226 781 A1 ist ein Verfahren zur Bestimmung eines resultierenden Sollwerts zur Regelung einer Lenkeinrichtung eines Fahrzeugs bekannt, wobei zumindest in einem automatisierten Lenkbetrieb eines Fahrzeugs ein Sollwert für den automatisierten Lenkbetrieb bestimmt wird, wobei ein Sollwert für den manuellen Lenkbetrieb bestimmt wird, wobei der resultierende Sollwert bestimmt wird, indem der Sollwert für den automatisierten Lenkbetrieb in Abhängigkeit des Sollwerts für den manuellen Lenkbetrieb verändert wird. Vorzugsweise wird der resultierende Sollwert als Summe des Sollwerts für den automatisierten Lenkbetrieb und des Sollwerts für den manuellen Lenkbetrieb bestimmt.

Aus der EP 3 095 675 A1 ist ein gattungsgemäßes Lenkungssteuergerät bekannt, das derart ausgebildet ist Eingangssignale von mindestens einem Sensor zur Erfassung eines Lenkwunsches eines Kraftfahrzeugführers und mindestens einem Fahrerassistenzsystem zu erhalten. Das Lenkungssteuergerät generiert ein Stellsignal für eine Leistungselektronik, wobei das Stellsignal sich aus zwei Komponenten zusammensetzt, wobei die erste Komponente aus dem Eingangssignal des mindestens einen Sensors ermittelt wird, wobei die Signale des Fahrerassistenzsystems keinen Einfluss auf die erste Komponente haben. Die zweite Komponente wird aus den Eingangssignalen des mindestens einen Fahrerassistenzsystems ermittelt, wobei die Signale des Sensors bei der zweiten Komponente berücksichtigt wurden.

Ein ähnliches Lenkungssteuergerät ist aus der EP 2 842 833 A2 bekannt.

Der Erfindung liegt das technische Problem zugrunde, ein alternatives Lenkungssteuergerät zu schaffen sowie ein Verfahren zur Ermittlung eines Stellsignals für eine Leistungselektronik einer Lenkeinrichtung eines Kraftfahrzeugs zur Verfügung zu stellen.

Die Lösung des technischen Problems ergibt sich durch ein Lenkungssteuergerät mit den Merkmalen des Anspruchs 1 sowie ein Verfahren mit den Merkmalen des Anspruchs 2.

Das Lenkungssteuergerät ist derart ausgebildet, Eingangssignale von mindestens einem Sensor zur Erfassung eines Lenkwunsches eines Kraftfahrzeugführers und mindestens einem Fahrerassistenzsystem zu erhalten. Das Lenkungssteuergerät ist weiter derart ausgebildet, ein Stellsignal für eine Leistungselektronik zu generieren, wobei das Stellsignal sich aus zwei Komponenten zusammensetzt, wobei die erste Komponente aus dem Eingangssignal des mindestens einen Sensors ermittelt wird, wobei die Signale des Fahrerassistenzsystems keinen Einfluss auf die erste Komponente haben, und die zweite Komponente aus den Eingangssignalen des mindestens einen Fahrerassistenzsystems ermittelt wird, wobei die Signale des Sensors bei der zweiten Komponente berücksichtigt werden. Der Grundgedanke dabei ist, das Haptikgefühl des Fahrerassistenzsystems aus der eigentlichen Lenkunterstützung herauszurechnen und separat zu modellieren. Dies bewirkt zwei Vorteile, nämlich zum einen, dass Änderungen der Lenkunterstützungsfunktion (z. B. Änderungen in der Bedatung oder Einstellung der Lenkunterstützungsfunktion) keinen Einfluss auf die Berechnung der Anteile des Fahrerassistenzsystems haben, und zum anderen, dass der Anteil aufgrund der Fahrerassistenzsysteme einfach ermittelt werden kann, was beispielsweise notwendig ist, um das Einhalten bestimmter Grenzwerte zu überwachen.

Für die Umsetzung der Generierung der zweiten Komponente existieren prinzipiell zwei Lösungen.

In einer ersten Ausführungsform wird die zweite Komponente ausschließlich in einer Lenkgefühlnachbildungseinheit ermittelt.

In einer alternativen Ausführungsform ist das Lenkungssteuergerät derart ausgebildet, dass die zweite Komponente sich aus mindestens zwei Subkomponenten zusammensetzt, wobei eine erste Subkomponente in einer Lenkgefühlnachbildungseinheit und eine zweite Subkomponente in einer Bypass-Kennlinieneinheit ermittelt wird.

Der Vorteil der ersten Alternative ist, dass nur eine einzige Einheit benötigt wird, wohingegen die zweite Alternative einfacher in bestehenden Systemen umsetzbar ist.

Hinsichtlich der verfahrensmäßigen Ausbildung wird voll inhaltlich auf die vorangegangenen Ausführungen Bezug genommen.

Die Erfindung wird nachfolgend anhand bevorzugter Ausführungsbeispiele näher erläutert. Die Figuren zeigen:
- Fig. 1: ein schematisches Blockschaltbild einer Lenkeinrichtung eines Kraftfahrzeugs,
- Fig. 2: ein Blockschaltbild eines Lenkungssteuergeräts (Stand der Technik),
- Fig. 3: ein Lenkungssteuergerät in einer ersten Ausführungsform und
- Fig. 4: ein Lenkungssteuergerät in einer zweiten Ausführungsform.

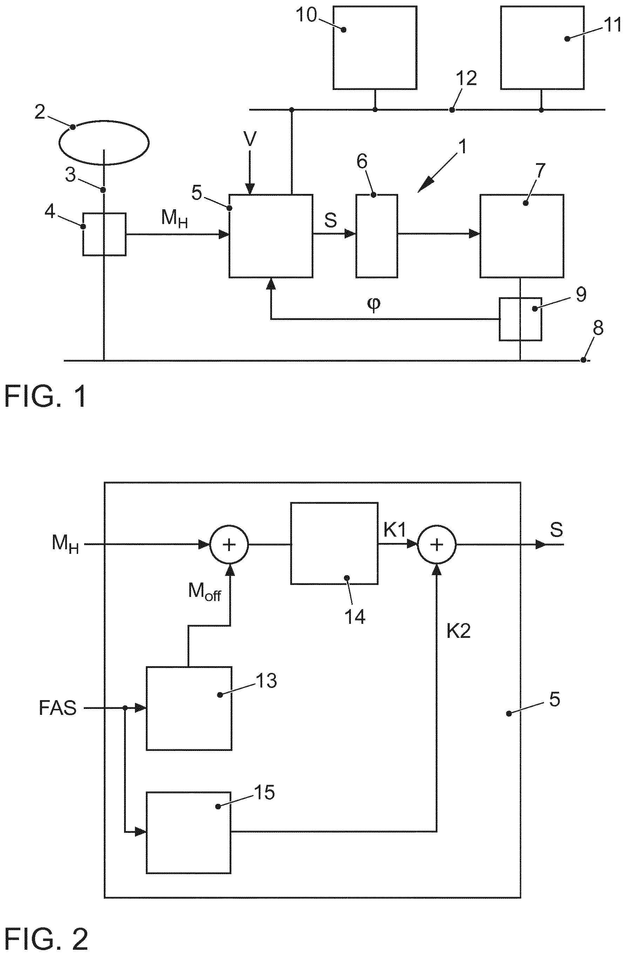

In der Fig. 1 ist schematisch eine Lenkeinrichtung 1 eines Kraftfahrzeugs dargestellt, die eine Lenkhandhabe 2 aufweist, die mit einer Eingangswelle 3 verbunden ist. An der Eingangswelle 3 ist ein Momentensensor 4 angeordnet, der ein Handmoment M_{H} an der Lenkhandhabe 2 erfasst. Weiter weist die Lenkeinrichtung 1 ein Lenkungssteuergerät 5, eine Leistungselektronik 6, einen elektrischen Servo-Motor 7 und eine Zahnstange 8 auf. Der Servo-Motor 7 weist einen Rotorlagesensor 9 auf, aus dessen Signalen auf die Stellung der Zahnstange 8 und somit auf den Lenkwinkel geschlossen werden kann. Dem Lenkungssteuergerät 5 werden die Signale des Momentensensors 4 sowie Signale von Fahrerassistenzsystemen 10, 11 zugeführt. Fahrerassistenzsysteme 10, 11 und Lenkungssteuergerät 5 sind über ein Bussystem 12 miteinander verbunden. Des Weiteren erhält das Lenkungssteuergerät 5 zusätzlich noch mindestens die Fahrzeuggeschwindigkeit V von einem nicht dargestellten Sensor oder Steuergerät. In Abhängigkeit der Eingangsgrößen M_{H}, V und Anforderungen der Fahrerassistenzsysteme 10, 11 erzeugt das Lenkungssteuergerät 5 ein Stellsignal S für die Leistungselektronik 6, die dann entsprechend den Servo-Motor 7 bestromt, damit dieser die Zahnstange 8 bewegt. Der Servo-Motor 7 kann dabei über ein nicht dargestelltes Kugelkopfgetriebe mit der Zahnstange 8 verbunden sein. Der Rotorlagesensor 9 liefert einen Rotorwinkel ϕ, mittels dessen aufgrund der bekannten Übersetzung die Position der Zahnstange 8 ermittelt wird. Weiter sei angemerkt, dass die Eingangswelle 3 im mechanischen Eingriff mit der Zahnstange 8 stehen kann, aber nicht muss. Das Stellsignal S setzt sich dabei aus zwei Komponenten zusammen, was nun anhand der Fig. 2 bis 4 näher erläutert werden soll, wobei der Einfachheit halber auf die Fahrzeuggeschwindigkeit V verzichtet wurde.

In der Fig. 2 ist ein Lenkungssteuergerät 5 gemäß dem Stand der Technik dargestellt. Dabei gehen das Handmoment M_{H} und eine Anforderung FAS eines Fahrerassistenzsystems 10, 11 als Eingangsgröße in das Lenkungssteuergerät 5 ein. In einem Handmoment-Offset-Kennlinien-Modul 13 wird ein Offset-Anteil M_{OFF} ermittelt, der aufgrund der Anforderung FAS auf das Handmoment M_{H} aufaddiert werden soll, damit ein FAS spezifisches Lenkgefühl dargestellt werden kann. Die Summe von Handmoment M_{H} und Offset-Anteil M_{OFF} wird dann in einem Lenkunterstützungs-Modul 14 in eine erste Komponente K1 für das Stellsignal S mittels einer Kennlinie bzw. Kennlinien-Schar umgerechnet. Dabei geht beispielsweise zusätzlich die Kraftfahrzeuggeschwindigkeit V als Parameter mit ein. Zusätzlich wird in einer Bypass-Kennlinieneinheit 15 eine zweite Komponente K2 für das Stellsignal S generiert, damit eine ausreichend große Kraft für das Fahrerassistenzsystem an der Zahnstange 8 erzeugt werden kann.

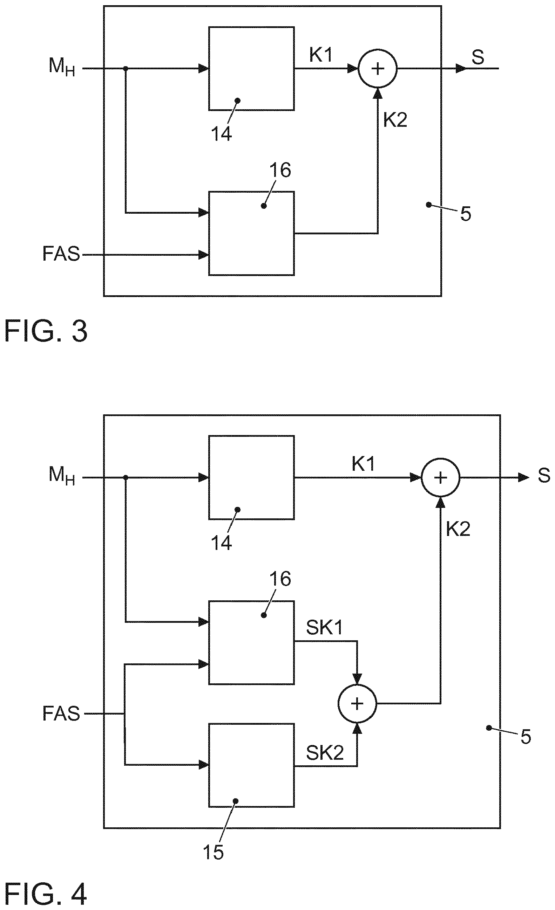

In der Fig. 3 ist nun eine erste erfindungsgemäße Ausführungsform dargestellt. Das Lenkungssteuergerät 5 weist dabei eine Lenkgefühlnachbildungseinheit 16 auf. Dieser wird neben der Anforderung FAS vom Fahrerassistenzsystem 10, 11 das Handmoment M_{H} zugeführt. Die Lenkgefühlnachbildungseinheit 16 weist dabei eine handmomentenabhängige Kennlinie auf, wobei eine Kraft über einem Momentenoffset abgelegt ist. Dies entspricht dem Anteil, der durch den Offset-Anteil M_{OFF} in dem Lenkunterstützungs-Modul 14 (gemäß Fig. 2) erzeugt wurde. Auf diesem Anteil kann dann noch der Anteil aus der Bypass-Kennlinieneinheit 15 aufaddiert werden. Der Vorteil ist, dass eine Änderung der Lenkunterstützungskennlinien in dem Lenkunterstützungs-Modul 14 keine Auswirkungen auf die Abstimmung der Fahrerassistenzsysteme mehr hat. Ein weiterer Vorteil ist, dass der gesamte Anteil des Fahrerassistenzsystems in der zweiten Komponente K2 steckt. Somit kann der Anteil des Fahrerassistenzsystems sehr einfach ermittelt werden und beispielsweise überwacht werden, dass der Anteil des Fahrerassistenzsystems absolute oder relative Grenzwerte an der Lenkvorgabe nicht überschreitet.

In der Fig. 4 ist eine alternative Ausführungsform dargestellt, wobei neben der Lenkgefühlnachbildungseinheit 16 eine Bypass-Kennlinieneinheit 15 vorgesehen ist. Dabei bildet die Lenkgefühlnachbildungseinheit 16 eine erste Subkomponente SK1 und die Bypass-Kennlinieneinheit 15 eine zweite Subkomponente SK2, deren Summe die zweite Komponente K2 für das Stellsignal S bilden. Der Vorteil dieser Ausführungsform ist, dass diese strukturell stärker der Ausführungsform gemäß Fig. 2 ähnelt, da die Bypass-Kennlinieneinheit 15 unverändert übernommen werden kann. Es kann dadurch auch die für das Fahrerassistenzsystem 10, 11 notwendige Kraft an der Zahnstange 8 unabhängig von der Lenkgefühlnachbildungseinheit 16 eingestellt werden.

## Patentansprüche

1. Lenkungssteuergerät (5), wobei das Lenkungssteuergerät (5) derart ausgebildet ist, Eingangssignale (M_{H}, FAS) von mindestens einem Sensor (4) zur Erfassung eines Lenkwunsches eines Kraftfahrzeugführers und mindestens einem Fahrerassistenzsystem (10, 11) zu erhalten, wobei das Lenkungssteuergerät (5) weiter derart ausgebildet ist, ein Stellsignal (S) für eine Leistungselektronik (6) zu generieren, wobei das Stellsignal (S) sich aus zwei Komponenten (K1, K2) zusammensetzt, wobei das Lenkungssteuergerät (5) derart ausgebildet ist, dass die erste Komponente (K1) aus dem Eingangssignal (M_{H}) des mindestens einen Sensors (4) ermittelt wird, wobei die Signale (FAS) des Fahrerassistenzsystems (10, 11) keinen Einfluss auf die erste Komponente (K1) haben, und die zweite Komponente (K2) aus den Eingangssignalen des mindestens einen Fahrerassistenzsystems (10, 11) ermittelt wird, wobei die Signale des Sensors (4) bei der zweiten Komponente (K2) berücksichtigt werden,
**dadurch gekennzeichnet, dass**
das Lenkungssteuergerät (5) derart ausgebildet ist, dass die zweite Komponente (K2) in einer Lenkgefühlnachbildungseinheit (16) ermittelt wird, oder
das Lenkungssteuergerät (5) derart ausgebildet ist, dass die zweite Komponente (K2) sich aus mindestens zwei Subkomponenten (SK1, SK2) zusammensetzt, wobei eine erste Subkomponente (SK1) in einer Lenkgefühlsnachbildungseinheit (16) und eine zweite Subkomponente (SK2) in einer Bypass-Kennlinieneinheit (15) ermittelt wird.

2. Verfahren zur Ermittlung eines Stellsignals (S) für eine Leistungselektronik (6) einer Lenkeinrichtung (1) eines Kraftfahrzeugs, mittels mindestens eines Lenkungssteuergerätes (5), mindestens einem Sensor (4) zur Erfassung eines Lenkwunsches eines Kraftfahrzeugführers und mindestens eines Fahrerassistenzsystems (10, 11), wobei das Stellsignal (S) sich aus zwei Komponenten (K1, K2) zusammensetzt, wobei
die erste Komponente (K1) aus dem Eingangssignal (M_{H}) des mindestens einen Sensors (4) ermittelt wird, wobei die Signale (FAS) des Fahrerassistenzsystems (10, 11) keinen Einfluss auf die erste Komponente (K1) haben, und die zweite Komponente (K2) aus den Eingangssignalen (FAS) des mindestens einen Fahrerassistenzsystems (10, 11) ermittelt wird, wobei die Signale (M_{H}) des Sensors (4) bei der zweiten Komponente (K2) berücksichtigt werden,
**dadurch gekennzeichnet, dass**
die zweite Komponente (K2) in einer Lenkgefühlnachbildungseinheit (16) ermittelt wird, oder
dass die zweite Komponente (K2) sich aus mindestens zwei Subkomponenten (SK1, SK2) zusammensetzt, wobei eine erste Subkomponente (SK1) in einer Lenkgefühlsnachbildungseinheit (16) und eine zweite Subkomponente (SK2) in einer Bypass-Kennlinieneinheit (15) ermittelt wird.

## Claims

1. Steering control unit (5), wherein the steering control unit (5) is designed to receive input signals (M_{H}, FAS) from at least one sensor (4) for sensing a steering requirement of a motor vehicle driver and from at least one driver assistance system (10, 11), wherein the steering control unit (5) is further designed to generate an actuating signal (S) for power electronics (6), the actuating signal (S) being made up of two components (K1, K2), wherein
the steering control unit (5) is designed in such a way that the first component (K1) is ascertained from the input signal (M_{H}) of the at least one sensor (4), the signals (FAS) of the driver assistance system (10, 11) having no influence on the first component (K1), and the second component (K2) is ascertained from the input signals of the at least one driver assistance system (10, 11), the signals of the sensor (4) being taken into consideration in the second component (K2), **characterized in that**
the steering control unit (5) is designed in such a way that the second component (K2) is ascertained in a steering feel replication unit (16),
the steering control unit (5) is designed in such a way that the second component (K2) is made up of at least two subcomponents (SK1, SK2), a first subcomponent (SK1) being ascertained in a steering feel replication unit (16) and a second subcomponent (SK2) being ascertained in a bypass characteristic curve unit (15).

2. Method for ascertaining an actuating signal (S) for power electronics (6) of a steering device (1) of a motor vehicle, by means of at least one steering control unit (5), at least one sensor (4) for sensing a steering requirement of a motor vehicle driver and at least one driver assistance system (10, 11), the actuating signal (S) being made up of two components (K1, K2), wherein
the first component (K1) is ascertained from the input signal (M_{H}) of the at least one sensor (4), the signals (FAS) of the driver assistance system (10, 11) having no influence on the first component (K1), and the second component (K2) is ascertained from the input signals (FAS) of the at least one driver assistance system (10, 11), the signals (M_{H}) of the sensor (4) being taken into consideration in the second component (K2),
**characterized in that**
the second component (K2) is ascertained in a steering feel replication unit (16), or
the second component (K2) is made up of at least two subcomponents (SK1, SK2), a first subcomponent (SK1) being ascertained in a steering feel replication unit (16) and a second subcomponent (SK2) being ascertained in a bypass characteristic curve unit (15).

## Revendications

1. Unité de commande de direction (5), l'unité de commande de direction (5) étant conçue pour recevoir des signaux d'entrée (M_{H}, FAS) provenant d'au moins un capteur (4), destiné à détecter une demande de direction d'un conducteur de véhicule automobile, et d'au moins un système d'assistance à la conduite (10, 11), l'unité de commande de direction (5) étant en outre conçue pour générer un signal de réglage (S) destiné à l'électronique de puissance (6), le signal de réglage (S) étant composé de deux composantes (K1, K2), l'unité de commande de direction (5) étant conçue de manière que la première composante (K1) soit déterminée à partir du signal d'entrée (M_{H}) de l'au moins un capteur (4), les signaux (FAS) du système d'assistance à la conduite (10, 11) n'ayant aucune influence sur la première composante (K1), et la deuxième composante (K2) étant déterminée à partir des signaux d'entrée de l'au moins un système d'assistance à la conduite (10, 11), les signaux du capteur (4) étant pris en compte dans la deuxième composante (K2),
**caractérisée en ce que**
l'unité de commande de direction (5) est conçue de manière que la deuxième composante (K2) soit déterminée dans une unité de simulation de sensation de direction (16), ou
l'unité de commande de direction (5) est conçue de manière que la deuxième composante (K2) soit composée d'au moins deux sous-composantes (SK1, SK2), une première sous-composante (SK1) étant déterminée dans une unité de simulation de sensation de direction (16) et une deuxième sous-composante (SK2) étant déterminée dans une unité de caractéristique de dérivation (15).

2. Procédé de détermination d'un signal de réglage (S) d'une électronique de puissance (6) d'un dispositif de direction (1) d'un véhicule automobile, au moyen d'au moins une unité de commande de direction (5), d'au moins un capteur (4) destiné à détecter une demande de direction d'un conducteur de véhicule automobile et d'au moins un système d'assistance à la conduite (10, 11), le signal de réglage (S) étant composé de deux composantes (K1, K2),
la première composante (K1) étant déterminée à partir du signal d'entrée (M_{H}) de l'au moins un capteur (4), les signaux (FAS) du système d'assistance à la conduite (10, 11) n'ayant aucune influence sur la première composante (K1), et la deuxième composante (K2) étant déterminée à partir des signaux d'entrée (FAS) de l'au moins un système d'assistance à la conduite (10, 11), les signaux (M_{H}) du capteur (4) étant pris en compte dans la deuxième composante (K2),
**caractérisé en ce que**
la deuxième composante (K2) est déterminée dans une unité de simulation de sensation de direction (16), ou la deuxième composante (K2) est composée d'au moins deux sous-composantes (SK1, SK2), une première sous-composante (SK1) étant déterminée dans une unité de simulation de sensation de direction (16) et une deuxième sous-composante (SK2) étant déterminée dans une unité de caractéristique de dérivation (15).
